(19) Europäisches Patentamt
European Patent Office
Office européen des brevets

(11) **EP 4 644 351 A2**

(12) **EUROPÄISCHE PATENTANMELDUNG**

(43) Veröffentlichungstag:
05.11.2025 Patentblatt 2025/45

(21) Anmeldenummer: 25191510.4

(22) Anmeldetag: 21.12.2023

(51) Internationale Patentklassifikation (IPC):
*C04B 37/02* (2006.01)

(52) Gemeinsame Patentklassifikation (CPC):
**C04B 37/025;** C04B 2235/96; C04B 2237/06;
C04B 2237/064; C04B 2237/343; C04B 2237/402;
C04B 2237/407; C04B 2237/60; C04B 2237/708

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **23.12.2022 DE 102022134661**

(62) Dokumentnummer(n) der früheren Anmeldung(en) nach Art. 76 EPÜ:
**23840657.3 / 4 638 394**

(71) Anmelder: **Rogers Germany GmbH**
**92676 Eschenbach (DE)**

(72) Erfinder:
• **Wagle, Fabian**
**95447 Bayreuth (DE)**
• **Lechner, Ralf**
**95473 Creußen (DE)**

(74) Vertreter: **Müller Schupfner & Partner**
**Patent- und Rechtsanwaltspartnerschaft mbB (Muc)**
**Bavariaring 11**
**80336 München (DE)**

Bemerkungen:
Diese Anmeldung ist am 24.07.2025 als Teilanmeldung zu der unter INID-Code 62 erwähnten Anmeldung eingereicht worden.

(54) **VERFAHREN ZUR HERSTELLUNG EINES METALL-KERAMIK-SUBSTRATS, KERAMIKELEMENT SOWIE METALLSCHICHT FÜR EIN SOLCHES VERFAHREN UND METALL-KERAMIK-SUBSTRAT HERGESTELLT MIT EINEM SOLCHEN VERFAHREN**

(57) Verfahren zur Herstellung eines Metall-Keramik-Substrats (1), umfassend
- Bereitstellen mindestens einer ersten Metallschicht (10) zur Ausbildung einer Bauteilmetallisierung und eines Keramikelements (30),
- Anbinden der mindestens einen ersten Metallschicht (10) an das Keramikelement (30) mittels eines Direktanbindungsverfahrens, insbesondere eines DCB-Verfahrens oder eines DAB-Verfahrens, durch das eine gemeinsame erste Bindungsschicht (12) zwischen Keramikelement (30) und der mindestens einen Metallschicht (10) ausgebildet wird,
wobei zur Verbesserung einer Haftfestigkeit zwischen der mindestens einen ersten Metallschicht (10) und dem Keramikelement (30) für das Anbinden mittels des Direktanbindungsverfahrens ein erstes Mittel zur Förderung einer Spinellbildung in einem für die Bildung der ersten Bindungsschicht (12) vorgesehenen Bereich bereitgestellt wird.

FIG. 1

**Beschreibung**

Die vorliegende Erfindung betrifft ein Verfahren zur Herstellung eines Metall-Keramik-Substrats, ein Keramikelement sowie eine Metallschicht für ein solches Verfahren und ein Metall-Keramik-Substrat hergestellt mit einem solchen Verfahren.

Metall-Keramik-Substrate sind als Leiterplatten oder Platinen aus dem Stand der Technik hinlänglich bekannt, beispielsweise aus der DE 10 2013 104 739 A1, der DE 19 927 046 B4 und der DE 10 2009 033 029 A1. Typischerweise werden auf einer Bauteilseite des Metall-Keramik-Substrats bzw. des Metall-Keramik-Substrats Anschlussflächen für elektrische Bauteile und Leiterbahnen angeordnet, wobei die elektrischen Bauteile und die Leiterbahnen zu elektrischen Schaltkreisen zusammenschaltbar sind. Wesentliche Bestandteile der Metall-Keramik-Substrate sind eine Isolationsschicht, die bevorzugt aus einer Keramik gefertigt ist, und wenigstens eine an die Isolationsschicht angebundene Metallschicht. Wegen ihrer vergleichsweise hohen Isolationsfestigkeiten haben sich aus Keramik gefertigte Isolationsschichten in der Leistungselektronik als besonders vorteilhaft erwiesen. Durch eine Strukturierung der Metallschicht können sodann Leiterbahnen und/oder Anschlussflächen für die elektrischen Bauteile realisiert werden.

Für die Herstellung derartiger Keramiksubstrate ist es typischerweise vorgesehen, dass eine Metallschicht bzw. -lage an ein Keramikelement angebunden wird. Neben einem Aktivlotverfahren ist beispielsweise auch ein Direktanbindungsverfahren bekannt, beispielsweise in Form eines Direct Copper Bonding (DCB) - Verfahrens oder eines Direct Aluminum Bonding (DAB) - Verfahrens. Solche Direktanbindungsverfahren gestatten die direkte Anbindung der Metallschicht an das Keramikelement, insbesondere ohne das Erfordernis einer Lotschicht, die zwischen Metallschicht und Keramikelement angeordnet ist.

Für solche Metall-Keramik-Substrate, die mittels eines entsprechenden Direktanbindungsverfahrens hergestellt wurden, wird es zunehmend zur Herausforderung, ausreichend hohe Haftfestigkeiten bereitzustellen. Die Haftfestigkeit spezifiziert dabei ein Haftvermögen der angebundenen Metallschicht am Keramikelement. Dabei wird es auch zunehmend zur Herausforderung, dass mit dem Trend zur Miniaturisierung, beispielsweise in Form von feineren Leiterbahnstrukturen, die Neigung zur Delamination der Metallschicht vom Keramikelement steigt.

Ferner wird bei Metall-Keramik-Substraten eine der Bauteilmetallisierung gegenüberliegende Rückseitenmetallisierung ausgebildet, um einem Durchbiegen des Metall-Keramik-Substrats entgegenzuwirken. Ein solches Durchbiegen tritt nämlich andernfalls auf, wenn die Metallschicht nur einseitig an das Keramikelement angebunden wird, weil aufgrund unterschiedlicher Ausdehnungskoeffizienten die thermomechanischen Spannungen einen Verzug im Metall-Keramik-Substrat veranlassen würden. Daher ist eine Rückseitenmetallisierung zweckmäßig, die einem entsprechenden Durchbiegen entgegenwirkt. Es hat sich dabei herausgestellt, dass regelmäßig das Haftvermögen für die Bauteilmetallisierung auf der einen Seite und die Rückseitenmetallisierung auf der anderen Seite oftmals unterschiedlich sind.

Hiervon ausgehend macht es sich die vorliegende Erfindung zur Aufgabe, Metall-Keramik-Substrate herzustellen, die im Rahmen eines DCB- bzw. eines Direktanbindungsverfahrens hergestellt werden, und dabei ein höheres Haftvermögen für die Bindung zwischen Keramikelement und Metallschicht aufweisen. Zudem sollen möglichst auf Vorderseite und Rückseite des Metall-Keramik-Substrats vergleichbare Haftfestigkeiten vorliegen.

Diese Aufgabe wird gelöst durch das Verfahren gemäß Anspruch 1, das Keramikelement gemäß Anspruch 7, die Metallschicht gemäß Anspruch 8 und das Metall-Keramik-Substrat gemäß Anspruch 9. Die Figuren und die Beschreibung enthalten weitere Ausführungsbeispiele der Erfindung.

Gemäß einem ersten Aspekt der vorliegenden Erfindung ist ein Verfahren zur Herstellung eines Metall-Keramik-Substrats vorgesehen, umfassend

- Bereitstellen mindestens einer ersten Metallschicht zur Ausbildung einer Bauteilmetallisierung und eines Keramikelements,
- Anbinden der mindestens einen ersten Metallschicht an das Keramikelement mittels eines Direktanbindungsverfahrens, insbesondere eines DCB-Verfahrens oder eines DAB-Verfahrens, durch das eine gemeinsame erste Bindungsschicht zwischen Keramikelement und der mindestens einen Metallschicht ausgebildet wird,

wobei zur Verbesserung einer Haftfestigkeit zwischen der mindestens einen ersten Metallschicht und dem Keramikelement für das Anbinden mittels des Direktanbindungsverfahrens ein erstes Mittel zur Förderung einer Spinellbildung in einem für die Bildung der ersten Bindungsschicht vorgesehenen Bereich bereitgestellt und insbesondere gezielt eingestellt wird.

Im Gegensatz zu den aus dem Stand der Technik bekannten Verfahren ist es erfindungsgemäß vorgesehen, dass gezielt Mittel zur Förderung der Spinellbildung in den Anbindungsprozess eingebunden werden bzw. hinzugefügt werden. Es hat sich herausgestellt, dass die erhöhte Spinellbildung signifikant zur Verbesserung des Haftvermögens beiträgt. Insbesondere wurde auch festgestellt, dass durch eine erhöhte Spinellbildung in der Bindungsschicht es mit Vorteil möglich ist, die Biege-Bruch-Festigkeit zu erhöhen. Hierbei ist festzustellen, dass nach dem Bindungsprozess bzw. nach dem Anbinden mittels des Direktanbindungsverfahrens, zwischen Metallschicht und Keramikelement eine Bindungsschicht ausgebildet wird, die zweilagig ist, wobei eine erste Lage ein eutektisches Gefüge, beispielsweise aus Kupfer und Sauerstoff bildet, und eine zweite Lage eine Spinellschicht ist. Insbesondere hat es sich herausgestellt, dass durch ein gezieltes Einbringen von chemischen Elementen die Spinellbildung bzw. die Zusammensetzung und Größe der Spinellschicht beeinflussbar ist, wobei mit zunehmender Menge an ausgebildeten Spinellen das Haftvermögen erhöht werden konnte, die Biege-Bruch-Festigkeit verbessert und die Temperaturwechselbeständigkeit des Metall-Keramik-Substrats erhöht werden konnte.

Vorzugsweise ist das Metall-Keramik-Substrat als Leiterplatte ausgebildet, bei der im gefertigten Zustand die mindestens eine Metallschicht, die an das Keramikelement angebunden ist und somit die Bauteilmetallisierung bildet, strukturiert ist. Die Bauteilmetallisierung umfasst dabei mehrere voneinander elektrisch isolierte und räumlich getrennte Metallabschnitte. Beispielsweise ist es hierzu vorgesehen, dass nach dem Anbindungsschritt auch eine Strukturierung, beispielsweise durch Lasern, Ätzen und/oder eine mechanische Bearbeitung, vorgenommen wird, mit der Leiterbahnen und/oder Anschlüsse für elektrische oder elektronische Bauteile realisiert werden. Vorzugsweise ist es vorgesehen, dass an einem gefertigten Metall-Keramik-Substrat an dem Keramikelement, an dem der Metallschicht gegenüberliegenden Seite, eine weitere Metallschicht, insbesondere eine Rückseitenmetallisierung und/oder ein Kühlelement vorgesehen ist. Dabei dient die Rückseitenmetallisierung vorzugsweise dazu, einer Durchbiegung entgegenzuwirken und das Kühlelement dient einem wirkungsvollen Abführen von Wärme, die im Betrieb von elektrischen bzw. elektronischen Bauteilen ausgeht, die an die Leiterplatte, bzw. das Metall-Keramik-Substrat angebunden sind.

Als Materialien für die Metallschichten bzw. den Metallabschnitte, d. h. für erste Metallschicht und eine zweite Metallsicht sind Kupfer, Aluminium, Molybdän und/oder deren Legierungen, sowie Laminate wie CuW, CuMo, CuAl, AlCu und/oder CuCu vorstellbar, insbesondere eine Kupfer-Sandwichstruktur mit einer ersten Kupferschicht und einer zweiten Kupferschicht, wobei sich eine Korngröße in der ersten Kupferschicht von einer zweiten Kupferschicht unterscheidet. Weiterhin ist bevorzugt vorgesehen, dass die mindestens eine Metallisierung, d. h. die primäre Bauteilmetallisierung oder sekundäre Bauteilmetallisierung, oberflächenmodifiziert ist. Als Oberflächenmodifikation ist beispielsweise eine Versiegelung mit einem Edelmetall, insbesondere Silber und/oder Gold, oder ENIG ("*electroless nickel immersion gold*") oder ein Kantenverguss an der ersten bzw. zweiten Metallisierungsschicht zur Unterdrückung einer Rissbildung bzw. -weitung denkbar.

Vorzugsweise umfasst das Keramikelement mindestens eine Keramikschicht, wobei die Keramikschicht $Al_2O_3$, $Si_3N_4$, AlN, eine HPSX-Keramik (d. h. eine Keramik mit einer $Al_2O_3$-Matrix, die einen x-prozentigen Anteil an $ZrO_2$ umfasst, beispielsweise $Al_2O_3$ mit 9% $ZrO_2$ = HPS9 oder $Al_2O_3$ mit 25% $ZrO_2$ = HPS25), SiC, BeO, MgO, hochdichtes MgO (> 90% der theoretischen Dichte), TSZ (tetragonal stabilisiertes Zirkonoxid) oder ZTA. Es ist dabei auch vorstellbar, dass die Isolationsschicht oder das Keramikelement als Verbund- bzw. Hybridkeramik ausgebildet ist, bei der zur Kombination verschiedener gewünschter Eigenschaften mehrere Keramikschichten, die sich jeweils in Hinblick auf ihre materielle Zusammensetzung unterscheiden, übereinander angeordnet und zu einer Isolationsschicht zusammengefügt sind. Vorzugsweise wird eine möglichst wärmeleitfähige Keramik für einen möglichst geringen Wärmewiderstand verwendet. Es ist auch vorstellbar, dass im Keramikelement oder in der Isolationsschicht zwischen zwei Keramikschichten eine metallische Zwischenschicht angeordnet ist.

Weiterhin ist es bevorzugt vorgesehen, dass das Verfahren ferner umfasst:

- Bereitstellen mindestens einer zweiten Metallschicht zur Ausbildung einer Rückseitenmetallisierung, wobei die mindestens eine erste Metallschicht und die mindestens eine zweite Metallschicht an einander gegenüberliegenden Seiten am Keramikelement angeordnet werden,
- Anbinden der mindestens einen zweiten Metallschicht an das Keramikelement mittels des Direktanbindungsverfahrens, durch das eine gemeinsame zweite Bindungsschicht zwischen Keramikelement und der mindestens einen zweiten Metallschicht ausgebildet wird,

  wobei zur Verbesserung einer Haftfestigkeit zwischen der zweiten Metallschicht und dem Keramikelement für das Anbinden mittels des Direktanbindungsverfahrens ein zweites Mittel zur Förderung der Spinellbildung in einen Bereich zur Bildung der zweiten Bindungsschicht bereitgestellt wird,
  wobei die mindestens eine erste Metallschicht und die mindestens eine zweite Metallschicht in einem gemeinsamen Anbindungsvorgang, vorzugsweise in einem gemeinsamen Ofendurchlauf, an das Keramikelement angebunden werden.

Es hat sich mit Vorteil herausgestellt, dass es möglich ist, derartige Haftfestigkeiten zu realisieren, dass lediglich ein einzelner Durchlauf durch einen Ofen, in dem eine Direktmetallanbindung erfolgt, ausreicht. Dadurch ist es in vorteilhafter Weise möglich, in einem gemeinsamen Verfahrensschritt, beispielsweise durch eine gemeinsame Anwesenheit oder Präsenz in einem Ofen, gleichzeitig die mindestens eine erste Metallschicht an das Keramikelement und die mindestens eine zweite Metallschicht an das Keramikelement anzubinden. Dadurch ist es nicht erforderlich, dass in einem ersten Anbindungsschritt die mindestens eine erste Metallschicht an das Keramikelement angebunden wird und in einem zweiten darauffolgenden Verfahrensschritt, beispielsweise in einem zweiten Durchlauf durch einen Ofen, die mindestens eine zweite Metallschicht an das Keramikelement bzw. den Vorverbund aus Keramikelement und mindestens erster Metallschicht angebunden wird. Insbesondere erweist es sich dabei als besonders vorteilhaft, dass das Haftvermögen der mindestens einen ersten Metallschicht und der mindestens einen zweiten Metallschicht am Keramikelement vergleichbar ist und/oder im Wesentlichen identisch. Entsprechend unterscheidet sich das Haftvermögen für die Bauteilmetallisierung und die Rückseitenmetallisierung nicht, wie es beispielsweise für solche Metall-Keramik-Substrate bekannt ist, die in einem zweistufigen Anbindungsverfahren unter Benutzung des Direktanbindungsverfahrens hergestellt werden.

Insbesondere bildet sich eine Haftfestigkeit aus, die im Mittel einen Wert annimmt, der größer ist als 6 N/mm, bevorzugt größer als 8 N/mm und besonders bevorzugt größer als 10 N/mm und/oder ein Unterschied zwischen einer Haftfestigkeit für die mindestens eine erste Metallschicht und einer Haftfestigkeit für die mindestens eine zweite Metallschicht ist als 15 kleiner %, bevorzugt kleiner als 10 % und besonders bevorzugt kleiner als 5 % der Haftfestigkeit der mindestens einen ersten Metallschicht.

Vorzugsweise handelt es sich bei dem ersten Mittel zur Förderung der Spinellbildung und dem zweiten Mittel zur Förderung der Spinellbildung um dasselbe Element bzw. um dieselben Elementzusammensetzungen bzw. Verbindungen, sodass die erste Bindungsschicht und die zweite Bindungsschicht im Wesentlichen in ihrer Zusammensetzung identisch bzw. vergleichbar sind. Insbesondere ist es vorgesehen, dass aus der mindestens ersten Metallschicht durch das Anbinden eine Bauteilmetallisierung bereitgestellt wird, während durch das Anbinden der mindestens einen zweiten Metallschicht eine Rückseitenmetallisierung hergestellt wird. Mit anderen Worten: Vor und während des Anbindens spricht man von der mindestens einen ersten Metallschicht bzw. mindestens einen zweiten Metallschicht während nach dem Bindungsprozess bzw. dem Anbinden die erste Metallschicht bzw. die zweite Metallschicht als Bauteilmetallisierung bzw. Rückseitenmetallisierung bezeichnet wird. Insbesondere ist es vorgesehen, dass zum Herstellen des Metall-Keramik-Substrats es ebenfalls vorgesehen ist, dass die Bauteilmetallisierung strukturiert wird, indem beispielsweise durch entsprechende Ätzverfahren, chemische Verfahren und/oder Laserbehandlungsverfahren Metall aus der Bauteilmetallisierung entfernt wird, um so Leiterbahnen und/oder Anschlussflächen für das Metall-Keramik-Substrat bereitzustellen bzw. herzustellen bzw. herzustellen.

Vorzugsweise ist es vorgesehen, dass das erste Mittel zur Förderung der Spinellbildung und/oder das zweite Mittel zur Förderung zur Spinellbildung Magnesium, Chrom, Eisen, Barium, Kalzium, Aluminium und/oder Mangan umfasst, insbesondere in oxidierter Form. Es hat sich insbesondere als besonders vorteilhaft für die Spinellbildung erwiesen, wenn zweiwertige, dreiwertige oder sogar vierwertige Elemente in entsprechenden Verbindungen bereitgestellt werden, da diese die Spinellbildung fördern. Beispielsweise wird gezielt Manganoxid, Magnesiumoxid oder Aluminiumoxid in den Bereich eingelassen, in dem die Bindungsschicht bzw. die zweite Bindungsschicht vorgesehen ist. Insbesondere ist es vorgesehen, dass in Hinblick auf die Oxidationsstufe die eingefügten Metalle mindestens zweiwertig, bevorzugt drei- oder vierwertig sind. Beispiele für vierwertige Elemente, die insbesondere eine hohe Sauerstoffaffinität aufweisen, sind Titan, Yttrium, Hafnium und/oder Zirkonium. Dadurch wird mit Vorteil auch die erste Lage aus dem eutektischen Gefüge reduziert, was sich ebenfalls als vorteilhaft herausgestellt hat für das Bindungsverfahren bzw. Bindungsverhalten in Hinblick auf die zu erzielenden Haftfestigkeiten.

Vorzugsweise ist es vorgesehen, dass das erste Mittel zur Förderung der Spinellbildung und/oder das zweite Mittel zur Förderung der Spinellbildung im Wesentlichen frei ist von einer Aluminiumverbindung und/oder einer Aluminiumoxidverbindung. Es hat sich herausgestellt, dass das erste und/oder zweite Mittel zur Förderung der Spinellbildung maßgeblich eine Häufigkeitsverteilung von Spinelltypen, insbesondere eines ersten Spinelltyps und/oder eines zweiten Spinelltyps in der gefertigten ersten bzw. zweiten Bindungsschicht beeinflusst. Dadurch können wiederum die Eigenschaften der ersten bzw. der zweiten Bindungsschicht beeinflusst werden. Wie später im Detail beschrieben wird, hat es sich herausgestellt, dass Bestandteile des ersten Mittels und/oder des zweiten Mittels bevorzugt in die Spinelle in der Bindungsschicht eingebaut werden und dabei ansonsten erzeugte Spinelle verdrängen, d. h. deren Häufigkeit reduzieren. Dabei hat es sich außerdem herausgestellt, dass aluminiumhaltige Spinelle in der Regel unerwünscht sind und weniger zuträglich sind als andere Spinelle, gerade für das Haftvermögen und die Temperaturwechselbeständigkeit. Daher erweist es sich als besonders vorteilhaft, wenn - beispielsweise für ein aluminiumhaltiges Keramikelement - das erste Mittel zur Förderung der Spinellbildung und/oder das zweite Mittel zur Förderung der Spinellbildung im Wesentlichen frei ist von einer Aluminiumverbindung und/oder einer Aluminiumoxidverbindung. Dabei versteht der Fachmann unter im Wesentlichen frei, dass ein Anteil an Aluminiumverbindungen und/oder Aluminiumoxidverbindungen im ersten Mittel und/oder zweiten Mittel kleiner ist als 5 Gew.-%, bevorzugt kleiner als 1 Gew. - % und besonders bevorzugt kleiner als 0,5 -%.

Insbesondere ist es vorgesehen, dass eine Konzentration an ersten Mittel zur Förderung der Spinellbildung größer ist als 20 g/l, bevorzugt größer als 50 g/l und besonders bevorzugt größer als 150 g/l und/oder wobei eine Konzentration an zweiten Mittel zur Förderung der Spinellbildung größer ist als 20 g/l, bevorzugt größer als 50 g/l und besonders bevorzugt größer als 150 g/l. Es hat sich herausgestellt, dass ab etwa 20 g/l der Einbau von Bestandteilen des ersten Mittels und/oder des zweiten Mittels zur Förderung der Spinellbildung in die Spinelle der Bindungsschicht signifikant gefördert wird. Zudem lässt sich eine entsprechende Proportionalität ab diesem Wert hierfür einstellen. Bei Mengen, die eine Menge von 150 g/l überschreiten, ist beispielsweise für Mg eine Art Sättigung anzunehmen, so dass mit Vorteil eine maximale Bevorzugung eines bestimmten Spinelltyps erreicht werden kann, wenn entsprechend sehr hohe Mengen an Mitteln zur Förderung der Spinellbildung verwendet werden.

Weiterhin ist es bevorzugt vorgesehen, dass mit dem ersten Mittel zur Förderung der Spinellbildung eine Häufigkeit eines ersten Spinelltyps im gefertigten Metall-Keramik-Substrat eingestellt wird. Mit anderen Worten: Es wird gezielt eine Art und/oder Menge des ersten und/oder zweiten Mittels zur Förderung der Spinellbildung eingesetzt, um beispielsweise einen ersten Spinelltyp gezielt zu fördern und einen zweiten Spinelltyp in seiner Häufigkeit zu reduzieren. Dadurch lassen sich mit Vorteil, die Spinelltypanteile bzw. deren Verhältnisse und somit die Eigenschaften der Bindungsschicht gezielt einstellen und manipulieren. Dadurch lässt sich beispielsweise auch eine Farbe der Bindungsschicht, ein Haftvermögen und/oder eine Temperaturwechselbeständigkeit gezielt und insbesondere kontrolliert einstellen.

Insbesondere ist es vorgesehen, dass der Anteil bzw. die Menge an ersten Mitteln und/oder zweiten Mitteln diejenigen Werte übersteigt, die sich beispielsweise auch im Rahmen einer nasschemischen Oxidation im Vorfeld des Anbindungsverfahrens einstellen lassen. Hierzu ist festzustellen, dass die üblichen nasschemischen Verfahren zur Oxidation von Metalllagen bzw. Metallschichten ebenfalls entsprechende Mittel, wie sie oben bezeichnet worden sind, enthalten, wodurch im geringen Maße, insbesondere auch unkontrolliert die Spinellbildung bislang gefördert worden ist. Durch das gezielte zusätzliche Einbringen solcher Elemente bzw. chemischen Mitteln ist es mit Vorteil möglich, die Spinellbildung zu fördern und dadurch die positiven Effekte für Haftfestigkeit, Bruchfestigkeit und Temperaturwechselbeständigkeit zu erhöhen bzw. zu veranlassen.

Insbesondere ist es vorgesehen, dass das erste Mittel zur Förderung der Spinellbildung und/oder das zweite Mittel zur Förderung der Spinellbildung auf eine Außenseite des Keramikelements der mindestens einen Metallschicht und/oder der zweiten Metallschicht aufgetragen wird, beispielsweise mit einem gasphysikalischen Abscheiden, einem chemischen Verfahren und/oder einem mechanischen Verfahren. Vorstellbar ist beispielsweise, dass mittels eines Sputterprozesses, eines CVD-Prozesses oder einem vergleichbaren Prozess die ersten Mittel und/oder zweiten Mittel zur Förderung der Spinellbildung eingebracht werden, insbesondere indem die jeweiligen Schichten beschichtet werden. Vorzugsweise werden sowohl Keramikelemente als auch erste Metallschicht bzw. zweite Metallschicht mit dem ersten Mittel und/oder zweiten Mittel beschichtet. Alternativ ist es auch vorstellbar, dass das Keramikelement und/oder die mindestens eine erste Metallschicht und/oder die mindestens eine zweite Metallschicht mit dem Mittel zur Förderung der Spinellbildung dotiert ist.

Mit anderen Worten: Es ist nicht zwingend eine Beschichtung der Außenseite erforderlich, um die entsprechenden Mittel zur Förderung in den Bereich einzubringen, sondern die Mittel zur Förderung der Spinellbildung können bereits im Körper der mindestens einen ersten Metallschicht, der mindestens einen zweiten Metallschicht und/oder des Keramikelements vorhanden sein und dadurch in den Bereich für die spätere Bindungsschicht einfließen bzw. diffundieren.

Vorzugsweise ist es vorgesehen, dass eine Dicke des abgeschiedenen ersten Mittels zur Förderung der Spinellbildung und/oder des abgeschiedenen zweiten Mittels zur Förderung der Spinellbildung einen Wert annimmt, der größer als 100 nm, bevorzugt größer als 500 nm und besonders bevorzugt größer als 1000 nm ist. Es hat sich in vorteilhafter Weise herausgestellt, dass es von Vorteil ist, vergleichsweise dicke Schichten aus dem ersten Mittel und dem zweiten Mittel bereitzustellen, was ebenfalls förderlich ist für die Verbesserung des Haftvermögens und/oder der Temperaturwechselbeständigkeit. Schließlich zeichnet sich eine dickere Schicht aus Mitteln zur Förderung der Spinellbildung dadurch aus, dass die Menge an Elementen, die für die Förderung der Spinellbildung bereitgestellt werden, erhöht wird.

Vorzugsweise ist es vorgesehen, dass die mindestens eine erste Metallschicht derart behandelt wird, dass sich an gegenüberliegenden Seiten der ersten Metallschicht unterschiedliche Größen für das erste Mittel zur Förderung der Spinellbildung einstellen und/oder die mindestens eine zweite Metallschicht derart behandelt wird, dass sich an gegenüberliegenden Seiten der zweiten Metallschicht unterschiedliche Größen für das zweite Mittel zur Förderung der Spinellbildung einstellen. Dadurch ist es in vorteilhafter Weise möglich auch die dem Keramikelement gegenüberliegende Außenseite wunschgemäß zu beeinflussen und den jeweiligen Spinellanteil festzulegen. Insbesondere hat sich herausgestellt, dass die zweite Lage in der Bindungsschicht, die den Spinellanteil bildet, wiederrum zweiteilig ist und sowohl eine erste Spinellkomponente als auch eine zweite poröse Spinellkomponente umfasst Dadurch kann bedarfsabhängig die Spinellbildung eingestellt werden und insbesondere an der Außenseite ein geringerer Anteil an Mitteln zur Förderung der Spinellbildung eingestellt werden, was sich als vorteilhaft erwiesen hat für die Oberflächenbeschaffenheit der angebundenen ersten Metallschicht oder zweiten Metallschicht, d. h. für die Bauteilmetallisierung und/oder Rückseitenmetallisierung.

Ein weiterer Gegenstand der vorliegenden Erfindung ist ein Keramikelement für das erfindungsgemäße Verfahren, wobei das Keramikelement ein erstes Mittel zur Förderung der Spinellbildung umfasst, beispielsweise an einer Außenseite oder innerhalb des Keramikelements. Alle beschriebenen Vorteile und Eigenschaften des Verfahrens lassen sich analog übertragen auf das Keramikelement.

Ein weiterer Gegenstand der vorliegenden Erfindung ist eine Metallschicht für ein erfindungsgemäßes Verfahren, wobei die Metallschicht ein Mittel zur Förderung der Spinellbildung umfasst, beispielsweise an einer Außenseite oder innerhalb der Metallschicht. Alle für das Verfahren beschriebenen Eigenschaften und Vorteile lassen sich analog übertragen auf die Metallschicht und andersrum.

Ein weiterer Gegenstand der vorliegenden Erfindung ist ein Metall-Keramik-Substrat hergestellt mit einem erfindungsgemäßen Verfahren umfassend

- ein Keramikelement, eine Bauteilmetallisierung und eine Rückseitenmetallisierung, wobei entlang einer Stapelrichtung gesehen das Keramikelement zwischen der Bauteilmetallisierung und der Rückseitenmetallisierung angeordnet ist,

- eine Bindungsschicht zwischen dem Keramikelement und der Bauteilmetallisierung mit einem ersten Spinellanteil pro Volumen und eine zweite Bindungsschicht zwischen dem Keramikelement und der Rückseitenmetallschicht mit einem zweiten Spinellanteil pro Volumen ausgebildet ist, wobei sich eine Haftfestigkeit für die Bauteilmetallisierung und/oder die Rückseitenmetallisierung ausbildet, die im Mittel einen Wert annimmt, der größer als 6 N/mm, bevorzugt größer als 8 N/mm und besonders bevorzugt größer als 10 N/mm ist und/oder ein Unterschied zwischen einer Haftfestigkeit für die Bauteilmetallisierung und einer Haftfestigkeit für die Rückseitenmetallisierung kleiner als 15 %, bevorzugt 10 % und besonders bevorzugt kleiner als 5 % der Haftfestigkeit der Bauteilmetallisierung ist..

Vorzugsweise nimmt die Dicke der ausgebildeten Spinellschicht einen Wert von mindestens 200 nm, bevorzugt von mindestens 500 nm und besonders bevorzugt von mindestens 1000 nm an.

Alle beschriebenen Vorteile und Eigenschaften des Verfahrens lassen sich analog übertragen auf das Metall-Keramik-Substrat und andersrum. Insbesondere wird durch das Verhältnis zwischen Differenz und Mittelwert zum Ausdruck gebracht, dass die ausgebildeten Spinellanteile vergleichbar sind in ihrer Größe und keine signifikanten Abweichungen zwischen den beiden Bindungsschichten existieren. Dies kann insbesondere nur dann der Fall sein, wenn die mindestens eine Metallschicht und mindestens eine weitere Metallschicht vergleichbare Temperatureinflüsse erfahren haben.

Ein weiterer Gegenstand der vorliegenden Erfindung ist ein Metall-Keramik-Substrat hergestellt mit dem erfindungsgemäßen Verfahren, wobei im gefertigten Metall-Keramik-Substrat zwischen Keramikelement und Metallschicht eine Spinelle umfassende Bindungsschicht, insbesondere die erste Bindungsschicht und/oder die zweite Bindungsschicht, ausgebildet ist, wobei die Spinelle umfassende Schicht mindestens einen ersten Spinelltyp aufweist, der zumindest einen Bestandteil des ersten und/oder zweiten Mittels zur Förderung einer Spinellbildung enthält, wobei der Anteil der Spinelle des ersten Spinelltyps mindestens 1,3- mal, bevorzugt mindestens 3-mal und besonders bevorzugt mindestens 5-mal so groß ist wie der Anteil der Spinelle des ersten Spinelltyps in einer Bindungsschicht in einem Referenzsubstrat, in dem eine Bindung zwischen der Metallschicht und dem Keramikelement mittels eines Direktanbindungsverfahren ohne eingebrachtes erstes und/oder zweites Mittel zur Förderung einer Spinellbildung erfolgt ist.

Alle beschriebenen Vorteile und Eigenschaften des Verfahrens lassen sich analog übertragen auf die Metall-Keramik-Substrate und andersrum.

Im Folgenden wird der Einfachheit halber auch von Bindungsschicht (statt von erster bzw. zweiter Bindungsschicht) gesprochen, sowie von einem Mittel zur Förderung der Spinellbildung. Die weiteren Ausführungen gelten unabhängig für das erste Mittel oder das zweite Mittel, beziehungsweise die erste und zweite Bindungsschicht, wie sie vorstehend bereits eingeführt worden sind. Sofern also Eigenschaften und Erkenntnisse beschrieben werden, die die Art der Bindungsschicht betreffen und nicht deren Seite am Keramikelement, wird vereinfachend von Bindungsschicht und Mittel zur Förderung der Spinellbildung gesprochen, ohne deren Bedeutung für die erste Bindungsschicht und die zweite Bindungsschicht bzw. für das erste Mittel und das zweite Mittel zur Förderung der Spinellbildung zu reduzieren.

Gegenüber den aus dem Stand der Technik bekannten Verfahren, bei denen zwar auch eine Spinellbildung im Rahmen des üblichen Direktanbindungsverfahrens erzeugt wird, hat es sich herausgestellt, dass mit einem ergänzenden Einbringen der Mittel zur Förderung der Spinellbildung, insbesondere oberhalb eines Schwellenwerts, es möglich ist, die Zusammensetzung der Spinelltypen in der ersten oder zweiten Bindungsschicht zu beeinflussen. Mit anderen Worten: Sofern eine ausreichende, einen Schwellenwert überschreitende Menge an Mitteln zur Förderung der Spinellbildung zwischen Keramikelement und Metallschicht eingebracht wird, kann dies die Zusammensetzung der Spinelltypen und damit die Eigenschaften der Bindungsschicht und damit die Gesamteigenschaften des Metall-Keramik-Substrats beeinflussen.

Es hat sich herausgestellt, dass beispielsweise durch Einbringen von zusätzlichem Magnesium zwischen dem Keramikelement und der Metallschicht gezielt Magnesium als Bestandteil für die Spinellbildung in der Bindungsschicht herangezogen wird. Dadurch werden bevorzugt Spinelle eines ersten Typs, also eines ersten Spinelltyps erzeugt, der Magnesium enthält, während andere Spinelltypen, die beispielsweise Kupfer oder Kalzium enthalten, in geringerem Umfang in der Bindungsschicht erzeugt werden. Dies ist ein Phänomen, das im Rahmen der üblichen Direktanbindungsverfahren der Metallschicht an das Keramikelement, nicht bekannt ist und nicht aus diesem hervorgeht. Auch wenn man der Auffassung ist, dass eine normale Eutektikumschicht dazu führt, dass eine entsprechende Förderung der Spinellbildung eintritt, wird dadurch jedoch keine gezielte Manipulation vorgenommen, in der ein bestimmter spezieller Typ von Spinellbildung in der späteren Bindungsschicht bevorzugt ist. Daher wird vorliegend bevorzugt gezielt der Anteil an identifizierten ersten Spinelltypen mit dem ersten Spinelltypanteil in einem Referenzsubstrat verglichen, bei dem einfach die Metallschicht und das Keramikelement miteinander verbunden werden, ohne dass zusätzlich ein Mittel zur Förderung der Spinellbildung vor der Direktanbindung für dieselbe zufügende Materialkombination eingebracht worden ist. Es hat sich herausgestellt, dass es sogar möglich ist, durch einen entsprechend großen Anteil an Mitteln zur Förderung der Spinellbildung beispielsweise an Magnesium, den Anteil des ersten Spinelltyps um mindestens einen Faktor 1,3, bevorzugt um einen Faktor 3, und besonders bevorzugt um einen Faktor 5 zu erhöhen im Vergleich zu dem Referenzsubstrat, bei dem zwar ebenfalls Spinellbildungen eintreten und insbesondere auch gefördert werden, allerdings nicht gezielt solche Förderungen erfolgen, die einen speziellen ersten Spinelltypen bevorzugen. Wie bereits dargestellt, kann dies erheblich zur Verbesserung des Haftvermögens und der Temperaturwechselbeständigkeit beitragen.

Bevorzugt ist es vorgesehen, dass die Spinelle umfassende Bindungsschicht einen zweiten Spinelltypen umfasst, wobei der Anteil an Spinellen des zweiten Spinelltyps mindestens 1,3-mal, bevorzugt mindestens 2,5-mal und besonders bevorzugt 3,5- mal kleiner ist wie der Anteil an Spinellen des zweiten Spinelltyps im Referenzsubstrat. Es hat sich somit ebenfalls herausgestellt, dass im genannten Beispiel nicht nur der Magnesiumanteil erhöht werden kann, sondern gezielt auch der Anteil an kupfer- und/oder kalziumhaltigen Spinellen, beispielsweise bei der Bindung einer Metallschicht an eine HPS-Keramik, reduziert werden kann. Dies ist besonders von Vorteil, weil kalzium- und kupferhaltige Spinelle nicht nur zu einer unerwünschten Verfärbung im Rot- oder Braunbereich führen, sondern diese Spinelle auch abträglich sind für eine verbesserte Haftfestigkeit und eine Temperaturwechselbeständigkeit. Mit anderen Worten: es ist möglich durch das Einbringen eines Mittels zur Förderung der Spinellbildung gezielt auf die Eigenschaften der Bindungsschicht und damit auf das Metall-Keramik-Substrats selbst zurückzugreifen, insbesondere die Haftfestigkeit für die spezielle Metallschicht-Keramikelement-Kombination zu verbessern, wie sie für eine übliche Direktanbindung zwischen Metallschicht und Keramikelement in der entsprechenden Materialkonstellation zu erwarten ist.

Vorzugsweise ist es vorgesehen, dass ein Widerstand über einen Isolationsgraben im gefertigten Metall-Keramik-Substrat mindestens 1,5-mal, bevorzugt mindestens 2,5-mal und besonders bevorzugt mindestens fünfmal so groß ist wie der Widerstand über ein Vergleichsisolationsgraben am Referenzsubstrat. Als Vergleichsisolationsgraben wird insbesondere ein Isolationsgraben mit denselben Dimensionen verstanden. Der Isolationsgraben trennt zwei benachbarte Metallabschnitte. Der Widerstand zwischen diesen beiden Metallabschnitten liegt üblicherweise im TΩ-Bereich und es hat sich herausgestellt, dass, insbesondere durch die Reduktion von Kupferspinellen in der Bindungsschicht, dieser Widerstand weiter erhöht werden kann, insbesondere mindestens um die anspruchsgemäßen Faktoren.

Vorzugsweise ist es vorgesehen, dass eine Rauheit der Spinellschicht im gefertigten Metall-Keramik-Substrat kleiner ist als eine Rauheit im Referenzsubstrat. Es hat sich mit Vorteil herausgestellt, dass durch die Nutzung der spinellfördernden Mittel die Rauheit im Vergleich zu dem Rohkeramikelement weniger ansteigt als im Falle eine Direktanbindung, bei der zwischen Metallschicht und Keramikelement kein weiteres Mittel zur Förderung der Spinellbildung außer das eigens produzierte Eutektikum beiträgt.

Insbesondere ist es vorgesehen, dass als Mittel zu Förderung der Spinellbildung solche ausgeschlossen werden, die ausschließlich und einfach durch die Oxidation der Metallschicht entstehen.

Vorzugsweise ist es vorgesehen, dass im gefertigten Metall-Keramik-Substrat eine Flächenrauheit $S_a$ einen Wert annimmt, der kleiner ist als 0,62 μm, bevorzugt kleiner als 0,6 μm und besonders bevorzugt kleiner als 0,58 μm. Insbesondere ist zu beobachten, dass der Wert für $S_a$ um einen Wert von mindestens 10% und bevorzugt mindestens 12 % gegenüber dem Wert für $S_a$ der Rohkeramik (d. h. dem Keramikelement vor dem Bonden) ansteigt, wenn kein Mittel zur Förderung der Spinellbildung zwischen Metallschicht und Keramikelement eingebracht wird. Im Gegensatz dazu ändert sich der Wert für $S_a$ um weniger als 8 % , bevorzugt weniger als 5 % und besonders bevorzugt weniger als 3 % gegenüber der Wert für $S_a$ für die Rohkeramik, wenn ein Mittel zur Förderung der Spinellbildung eingebracht wird.

Weitere Vorteile und Eigenschaften ergeben sich aus der nachfolgenden Beschreibung bevorzugter Ausführungsformen des erfindungsgemäßen Gegenstands mit Bezug auf die beigefügte Figur. Es zeigt:

**Fig. 1:** Metall-Keramik-Substrat gemäß einer ersten beispielhaften Ausführungsform der vorliegenden Erfindung;

**Fig. 2** Detailansicht der Bindungsschicht in einem Metall-Keramik-Substrat

**Fig. 3** Abhängigkeit von in einem Spinell eingebundenem Magnesium in einer Bindungsschicht vom Magnesiumanteil im ersten bzw. zweiten Mittel zur Förderung der Spinnelbildung,

**Fig. 4** Abhängigkeit von in einem Spinell eingebundenem Kalzium bzw. Kupfer in einer Bindungsschicht vom Magnesiumanteil im ersten bzw. zweiten Mittel zur Förderung der Spinnelbildung

**Fig. 5**     Abhängigkeit vom Widerstand über einem Isoaltionsgraben in einer Bindungsschicht vom Magnesiumanteil im ersten bzw. zweiten Mittel zur Förderung der Spinnelbildung und

**Fig. 6**     Darstellung einer Spinellschicht im gefertigten Substrat und

**Fig. 7**     Abhängigkeit von der Rauheit in einer Bindungsschicht vom Magnesiumanteil im ersten bzw. zweiten Mittel zur Förderung der Spinnelbildung

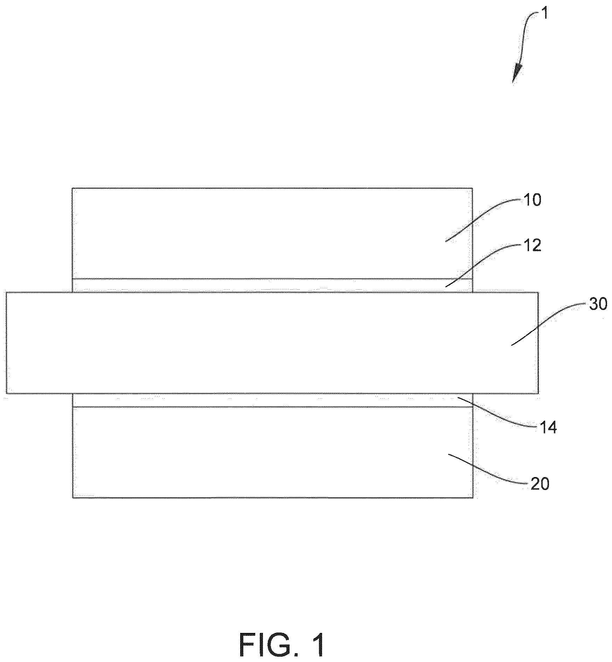

In der **Figur 1** ist ein Metall-Keramik-Substrat 1 gemäß einer ersten beispielhaften Ausführungsform der vorliegenden Erfindung dargestellt. Solche Metall-Keramik-Substrate 1, dienen vorzugsweise als Träger bzw. Leiterplatte für elektronische bzw. elektrische Bauteile, die an die mindestens eine erste Metallschicht 10 des Metall-Keramik-Substrats 1 an dessen Bauteilseite anbindbar sind. Dabei ist es vorzugsweise vorgesehen, dass die mindestens eine erste Metallschicht 10 strukturiert ist, um entsprechende Leiterbahnen und/oder Anschlussflächen auszubilden, d. h. im gefertigten Metall-Keramik-Substrat 1 umfasst die mindestens eine erste Metallschicht 10, d mehrere voneinander elektrisch isolierte Metallabschnitte, die dann die Bauteilmetallisierung ausbildet. Die sich im Wesentlich entlang einer Haupterstreckungsebene HSE erstreckende mindestens eine Metallschicht 10 bzw. Bauteilmetallisierung und ein sich entlang der Haupterstreckungsebene HSE ersteckendes Keramikelement 30 sind dabei entlang einer senkrecht zur Haupterstreckungsebene HSE verlaufenden Stapelrichtung S übereinander angeordnet und vorzugsweise über eine erste Bindungsschicht 12 miteinander gefügt bzw. verbunden. Vorzugsweise umfasst das Metall-Keramik-Substrat 1 neben der mindestens einen ersten Metallschicht 10 mindestens eine zweite Metallschicht 20, die in Stapelrichtung S gesehen an der der mindestens einen ersten Metallschicht 10 gegenüberliegenden Seite des Keramikelements 30 angeordnet und über eine zweite Bindungsschicht 14 an das Keramikelement 30 angebunden ist.

Dabei dient die mindestens eine zweite Metallschicht 20, die nach dem Anbinden als Rückseitenmetallisierung bezeichnet wird, wobei die mindestens eine zweite Metallschicht einem Durchbiegen des Metall-Keramik-Substrats 1, insbesondere des Metall-KeramikElements 1, entgegenwirkt, und/oder zumindest als Teil eines Kühlkörpers, der dazu ausgelegt ist, einen Wärmeeintrag, hervorgerufen durch elektrische oder elektronische Bauteile auf dem Metall-Keramik-Substrat 1, abzuführen.

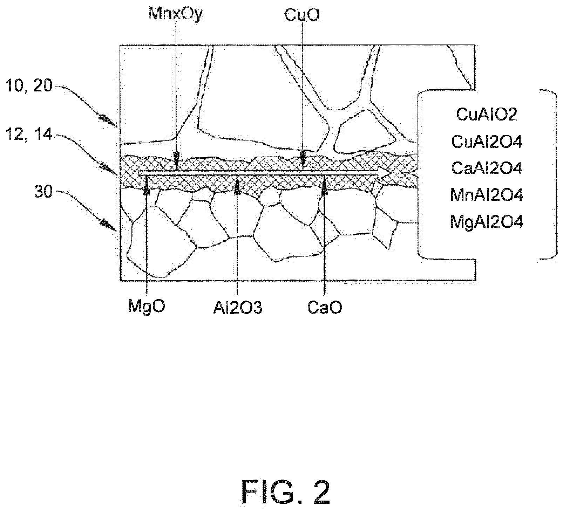

In **Figur 2** ist eine Detailansicht der Bindungsschicht 12, 14 zwischen der Metallschicht 10, 20 und dem Keramikelement 30 dargestellt. Insbesondere dient diese Darstellung dem Zweck, zu zeigen, dass die Bindungsschicht 12, 14, die sich infolge des Eutektikums bei einem Direktanbindungsverfahren, wie einem DCB-Verfahren, bildet und sich zwischen der Metallschicht 10, 20 und dem Keramikelement 30 im gefertigten Metall-Keramik-Substrat 1 erstreckt. Diese Bindungsschicht 12, 14 enthält eine Vielzahl von unterschiedlichen Spinellen. Hierbei handelt es sich um Molekülkomplexe, in denen einzelne Bestandteile eingebaut sind, die sich insbesondere aus den Fügepartnern ergeben. Dabei werden insbesondere auch Unreinheiten in dem Keramikelement 30 und/oder dem Kupfer einer als Kupferschicht ausgebildeten Metallschicht 10, 20 mit in diese Spinelle eingebaut. Typischerweise bilden sich bei der Bindung einer Aluminiumoxidkeramik mit einer Kupferschicht beispielsweise dies Spinelltypen $CuAlO$, $CuAlO_2$, $CuAl2O_4$, $CaAl_2O_4$ und/oder $MnAl_2O_4$ oder $MgAl_2O_4$. Somit bilden sich verschiedenste Spinelltypen innerhalb der Bindungsschicht 12, 14.

Es hat sich nun herausgestellt, dass sich bei dem hier vorgestellten Verfahren, bei dem ein erstes Mittel und/oder ein zweites Mittel zur Förderung der Spinellbildung vor dem Direktanbindungsverfahren zwischen der Metallschicht 10 ,20 und dem Keramikelement 30 angeordnet wird, verschiedene Auswirkungen auf das gefertigte Metall-Keramik-Substrat 1 beobachten lassen, die im Folgenden anhand eines Beispiels und verschiedener Analysen zusammengefasst sind.

Im Folgenden wird ein Metall-Keramik-Substrat 1 untersucht, bei dem eine Kupferschicht an eine HPS9-Keramik über ein DCB (direct copper bonding)-Verfahren angebunden wird. Dabei wurden vier verschiedene Fälle beleuchtet. In einem ersten Fall wurde kein Mittel zur Förderung der Spinellbildung zwischen der Kupferschicht und dem Keramikelement 30 angeordnet. Dies stellt den Fall des Referenzsubstrats dar. In drei weiteren Fällen wurde 1.) wenig (50 g/l Mg über $MgSO_4$) Mittel zur Förderung der Spinellbildung, 2) viel (100 g/l Mg über $MgSO_4$) Mittel zur Förderung der Spinellbildung und 3.) sehr viel (100 g/l Mg über $MgSO_4$) Mittel zur Förderung der Spinellbildung zwischen Keramikelement und Kupferschicht angeordnet. Anschließend wurden bestimmte Eigenschaften am gefertigten Metall-Keramik-Substrat untersucht.

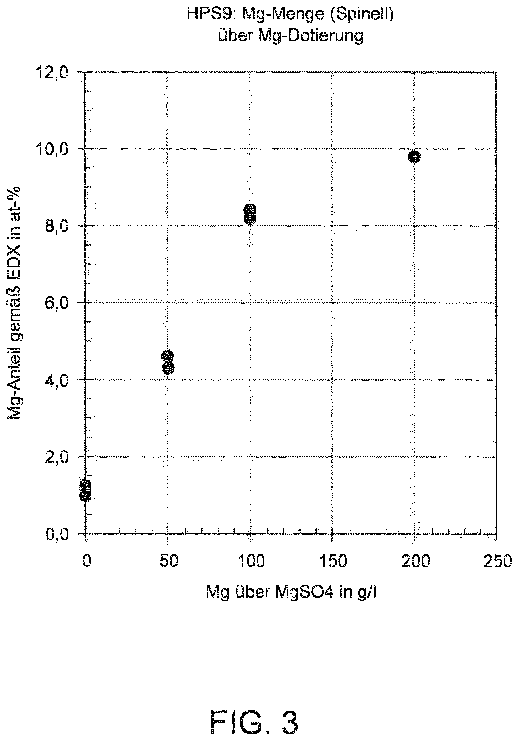

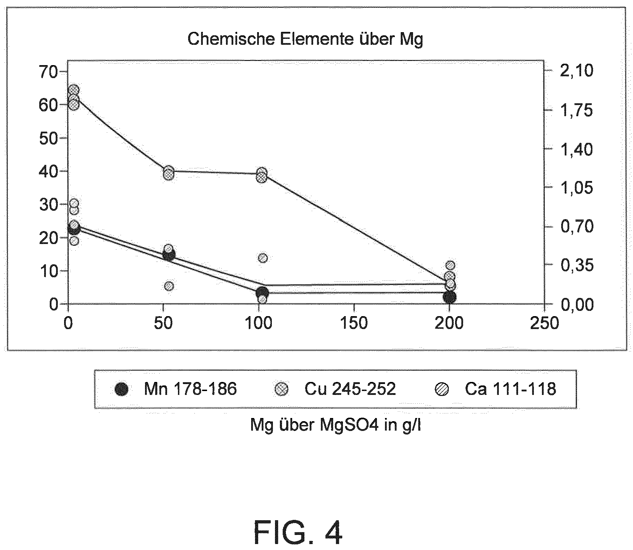

Zunächst einmal wurden die Materialzusammensetzungen der jeweiligen Bindungsschichten 12, 14 untersucht. Dazu wurde die angebundene Kupferschicht zunächst wieder weggeätzt bis die Bindungsschicht 12, 14 auf dem Keramikelement frei lag. Dadurch konnten mittels eines Rasterelektronenmikroskop EDX-Verfahren durchgeführt werden, das heißt elementsensible Verfahren durchgeführt werden, die die chemische Zusammensetzung der Bindungsschicht erkennen lassen. Hierbei wurden als Parameter eine Anregungsspannung von 5kV und eine Strahlungsintensität von 15 benutzt. Dadurch wurde es möglich, unterschiedliche Spinelltypen in der Bindungschicht zu identifizieren. Die Ergebnisse sind in den Figuren 3 und 4 zusammengefasst.

Hieraus ergibt sich folgendes Bild: Es hat sich herausgestellt, dass bei Nutzung eines ergänzenden Mittels zur Förderung der Spinellbildung, das vor dem eigentlichen Direktanbindungsverfahren zwischen der Keramikschicht und der Metallschicht aufgetragen wird, ein Bestandteil des Mittels vermehrt in die Spinelle der Bindungsschicht 12, 14 eingebaut wird. Dies führt dazu, dass ein erster Spinelltyp in dieser Bindungsschicht 12, 14 vermehrt vorzufinden ist im Vergleich zu einem Referenzsubstrat, bei dem Metallschicht 10, 20 und Keramikelement 30 aneinander gebunden werden, ohne dass dieses Mittel zur Förderung der Spinellbildung zwischen Keramikelement 30 und Metallschicht 10, 20 platziert wurde. Insbesondere hat sich herausgestellt, dass dieser erste Spinelltyp mindestens 1,3-mal, bevorzugt mehr als 3- mal, und besonders bevorzugt mehr als 5-mal so oft vorliegt als im Falle des Referenzsubstrats.

Die Graphik in **Figur 3** zeigt den jeweiligen Anteil an Spinellen mit Magnesium in den Bindungsschichten 12, 14 in Abhängigkeit vom Magnesiumanteil, wenn ein entsprechendes Mittel zur Förderung der Spinellbildung magnesiumhaltig ist bzw. vorwiegend aus Magnesium oder einem Magnesium enthaltenden Molekül, wie beispielsweise $MgSO_4$, zusammengesetzt ist. Es hat sich gezeigt, dass das eingebrachte Mittel zur Förderung der Spinellbildung, im exemplarisch dokumentierten und nachgewiesenen Fall aus der Abbildung 3, andere eingebaute Elemente im Spinell verdrängt und deren Platz einnimmt. Mit anderen Worten: es ist möglich die Spinneltypverteilung mit dem Mittel zur Förderung der Spinellbildung signifikant zu beeinflussen. Dabei substituieren Bestandteile des eingebrachten Mittels solche Bestandteile, die üblicherweise durch das Keramikelement 30 oder die Metallschicht 10 ,20 , hier Kupferschicht, in die Spinelle eingebracht werden. Vorliegend wird mit zunehmendem Anteil an Magnesium in dem eingebrachten Mittel zur Förderung der Spinellbildung, der Anteil an Magnesium vergrößert, der in der Bindungsschicht 12, 14 in entsprechenden Spinellen verbaut ist.

Zur Bildung der Darstellung aus Figur 3 wurde der in der Bindungsschicht 12, 14 identifizierte Anteil an Spinellen mit Magnesium, gegen die Menge an Magnesium aufgetragen, die vor dem eigentlichen Bond-Prozess zusätzlich und absichtlich zwischen Keramikelement 30 und Metallschicht 10, 20 eingebracht wurden. Es ist zu erkennen, dass mit zunehmendem absolutem Magnesiumanteil in dem Mittel zur Förderung des Spinellbildung ein entsprechend größerer relativer Anteil an magnesiumhaltigen Spinellen in der Bindungsschicht 12, 14 zu finden ist, insbesondere in einem viel größeren Umfang als es in solchen Fällen der Fall ist, wenn kein Mittel zur Förderung der Spinellbildung dazwischen eingebracht ist, d. h. im Falle des Referenzsubstrats.

Gleichzeitig hat sich ebenfalls herausgestellt, dass mit zunehmendem Magnesiumanteil beziehungsweise mit zunehmender Menge an Magnesium, das zwischen Keramikelement 30 und Metallschicht 10, 20 eingebracht wird, ein Anteil an Spinellen mit Kupfer bzw. mit Kalzium in der entsprechenden Bindungsschicht 12, 14 abnimmt. Dies ist in Figur 4 dargestellt. Mit anderen Worten: es werden solche Elemente, wie Kalzium und/oder Kupfer, die andernfalls innerhalb der Bindungsschicht 12, 14 in spezielle Spinelle eingebunden werden, reduziert. Somit hat sich gezeigt, dass durch das Einbringen eines speziellen Mittels zu Förderung der Spinellbildung, insbesondere die Zusammensetzung der Spinellschicht signifikant beeinträchtigt werden kann und insbesondere gezielt Magnesiumanteile im vorliegenden Fall erhöht und Kalzium - und Kupferanteile in den jeweiligen Spinellen reduziert werden können.

Dies ist insbesondere dann besonders vorteilhaft, wenn man bedenkt, dass dadurch gezielt unerwünschte Spinellphasen vermieden werden können. Beispielsweise ist $CuAlO_2$ unerwünscht, da es sich hierbei um einen Hochtemperaturhalbleiter handelt. Zudem trägt es maßgeblich zu einer Rotfärbung des Keramikelements 30 beziehungsweise der Bindungsschicht 12, 14 bei.

Bezüglich der $CuAl_2O_4$-Phase ist festzustellen, dass diese zu einer geringeren Haftfestigkeit führt, beziehungsweise einer geringeren Temperaturwechselbeständigkeit. Gleiches gilt für $CaAl_2O_4$ beziehungsweise für Spinelle, in die Kalzium anteilig eingebaut wird, indem Kalzium das sonst übliche Kation ersetzt. Beides führt in unerwünschter Weise zu einer Reduzierung der Temperaturwechselbeständigkeit und des Haftvermögens. Im Falle von $CuAl_2O_4$ beobachtet man zudem noch eine Braunfärbung. Im Gegensatz dazu sind $MgAl_2O_4$-Phasen wünschenswert, weil sie eine Haftfestigkeit und Temperaturwechselbeständigkeit fördern. Sie zeichnen sich zudem dadurch aus, dass sie farblos bzw. keine zusätzliche Färbung im Bereich der Bindungsschicht 12, 14 verursachen. Man kann also auch mit dem Mittel zur Förderung der Spinnelbildung die Bindungsschicht 12, 14 durch eine gezielte Manipulation der Spinelltypzusammensetzung optisch beeinflussen. Insbesondere ist es von Vorteil, wenn gerade ein Mittel zur Förderung der Spinellbildung, wie Magnesium, eingebracht wird und dies dazu führt, dass vermehrt der erste Spinelltyp Magnesium, zweite Spinelltypen verdrängt, die beispielsweise kupfer- oder kalziumastig sind. Dadurch wird gezielt die Bindungsschicht 12, 14 hinsichtlich ihrer Spinelltypzusammensetzung modifiziert und manipuliert, sodass das Haftvermögen steigt, insbesondere im Vergleich zu einem Fall, in dem kein Mittel zur Förderung der Spinellbildung zwischen Keramikelement 30 und Metallschicht 10, 20 eingebracht ist.

Wie die **Figur 4** darstellt, spielt in dem dargestellten Beispiel, bei dem eine HPS9-Keramik mit einer Metallschicht 10, 20 verbunden wurde, der Anteil des Mittels zur Förderung der Spinellbildung auch eine entscheidende Rolle für die Ausbildung der Kupfer- und Kalziumspinelle. Zu erkennen ist, dass mit zunehmendem absolutem Anteil an Magnesium im Mittel zur Förderung der Spinellbildung der Kupfer- und Kalziumanteil in den Spinellen sinkt und so eine gewünschte Manipulation stattfindet, die förderlich ist für das Haftvermögen beziehungsweise die Haftfestigkeit und die Temperaturwechselbeständigkeit des gebondeten, d. h. des gefertigten Metall-Keramik-Substrats 1.

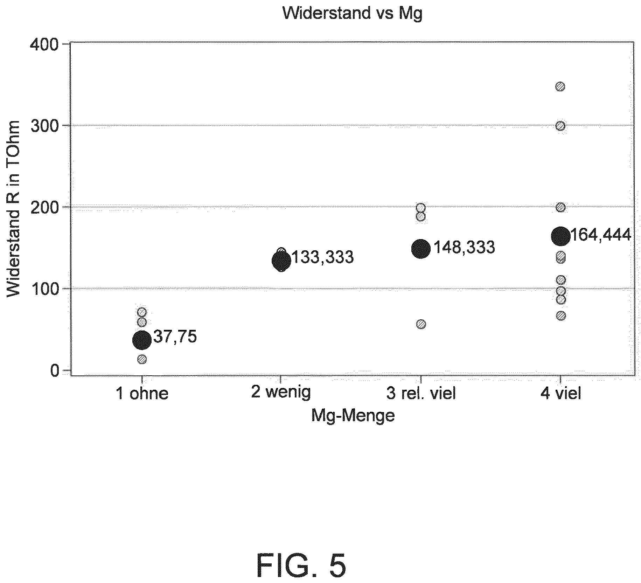

Eine weitere Beobachtung betrifft einen Widerstand, der sich zwischen zwei durch einen Isolationsgraben getrennten Metallabschnitten ergibt. Die Ergebnisse sind graphisch in **Figur 5** zusammengefasst.

Es hat sich herausgestellt, dass insbesondere aufgrund der Reduktion der Kupferspinelle in der Bindungsschicht 12, 14, der Widerstand mit zunehmender Menge an Mittel zur Förderung der Spinelle zwischen den Metallabschnitten entsprechend erhöht werden kann. Insbesondere hat sich gezeigt, dass der Widerstand zwischen zwei Metallabschnitten, die durch einen Isolationsgraben voneinander elektrisch isoliert sind, zumindest verdoppelt bevorzugt verdreifacht werden kann, wenn ein Mittel zur Förderung der Spinellbildung verwendet worden ist. Dies ist in Figur 5 dargestellt, die einen Flächenwiderstand für die verschieden hergestellten Metall-Keramik-Substrate 1 zeigt, die sich unterscheiden in Hinblick auf den Anteil an eingebrachtem Magnesium.

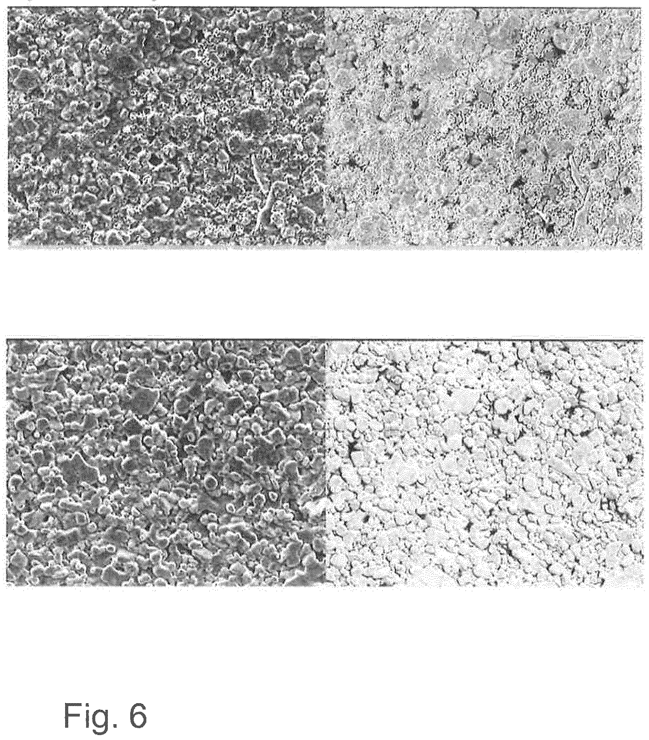

In **Figur 6** sind mikroskopische Aufnahmen der Bindungsschicht in einer Draufsicht dargestellt. Oben ist gezeigt, wie die Bindungsschicht 12, 14 aussieht, wenn zwischen dem Keramikelement 30 und der Metallschicht 10, 20 kein Mittel zur Förderung der Spinellbildung aufgetragen ist. Unten hingegen wurde dieselbe Aufnahme gemacht worden, für den Fall, dass eine Mittel zur Spinellförderung zwischen Keramikelement 30 und Metallschicht 10, 20 eingebracht worden ist, bevor ein Direktanbindungsverfahren Metallschicht 10, 20 und Keramikelement miteinander verbunden hat. Um diese Aufnahme zu machen, wurden entsprechend die Metallschichten wieder abgeätzt, um visuell die Oberflächen der Bindungsschichten zu erfassen. Es ist zu erkennen, dass in der oben dargestellten Aufnahme keine einzelnen Körnungen mehr zu erkennen sind und beispielsweise eine Korngrößenbestimmung des Keramikelements 30 nur schwer möglich wäre. Im Gegensatz dazu lassen sich im unteren Bild die Körnungen des Keramikelements 30 sehr gut erkennen. Insbesondere hat sich gezeigt, dass die Korngrößen im Falle der Nutzung eines Mittels zur Förderung der Spinellbildung im Wesentlichen derjenigen entspricht, die man für ein Rohkeramikelement annehmen kann. Diese lässt sich beispielsweise auch entlang einer Bruchkante ermitteln, um dann hier einen Querschliff hinsichtlich der Körnung zu untersuchen.

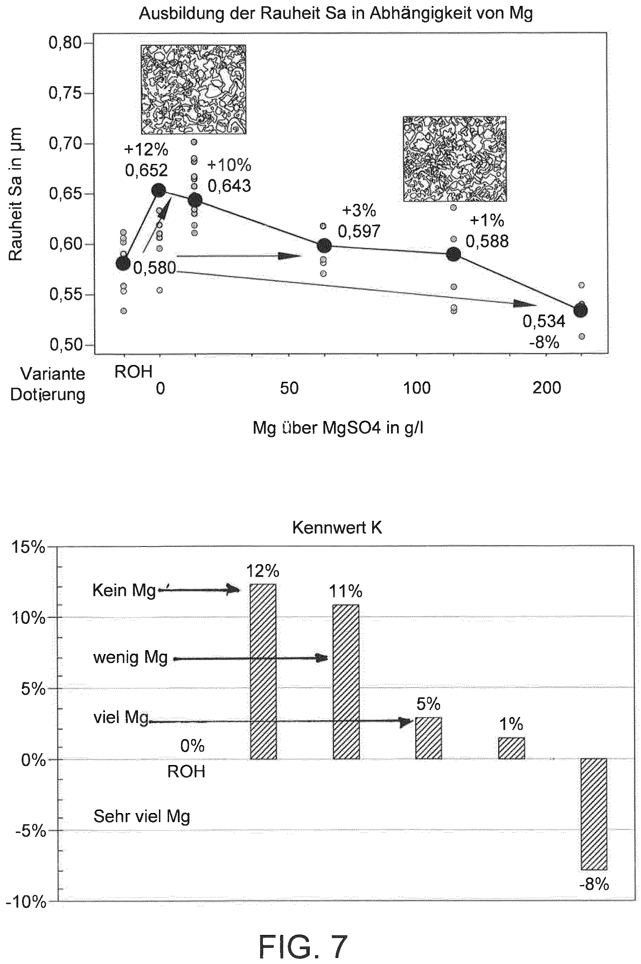

Die Figur 7 betrifft die ermittelten Rauheiten $S_a$ in der Bindungsschicht. Insbesondere hat sich herausgestellt, dass diese Rauheitswerte, die dieser Oberfläche zuzuordnen sind, im Wesentlichen, d. h. innerhalb bestimmter Toleranzen, denjenigen entsprechen, die der Rohkeramik zuzuordnen sind, d. h. dem Keramikelement bevor man den Bondprozess durchgeführt hat, wenn ein Mittel zur Förderung der Spinellbildung beigefügt wurde. Im Gegensatz dazu ist in der Oberflächenstruktur nach dem Bondprozess ohne das Mittel zur Förderung der Spinellbildung die Rauheit deutlich erhöht, insbesondere mindestens um einen Faktor 1,5, bevorzugt einen Faktor 2,5 und besonders bevorzugt einen Faktor von mehr als 3,5. Dies ist in der oberen Graphik der Figur 7 dargestellt. Es zeigt sich, dass bei einer Rauheit von 0,58 $\mu$m der Rohkeramik dieser Rauheitswert um 10 % - 12 % steigt, wenn man ohne eingebrachtes Mittel zur Förderung der Spinellbildung den Anbindungsprozess vollzieht. Mit zunehmendem absolutem Anteil an Mg, d. h. Mittel zur Förderung der Spinellbildung, nimmt die Rauheit wieder ab und gleicht sich an den Wert der Rohkeramik an bzw. unterschreitet diesen sogar im Fall von einer sehr großen Menge an Mitteln zur Förderung der Spinellbildung.

Insbesondere stellt sich eine Flächenrauheit $S_a$ ein, die kleiner als 0,62 $\mu$m, bevorzugt kleiner als 0,6 $\mu$m und besonders bevorzugt kleiner als 0,58 $\mu$m ist. Insbesondere ist zu beobachten, dass der Wert für $S_a$ um einen Wert von mindestens 10% und bevorzugt mindestens 12 % gegenüber dem Wert für $S_a$ der Rohkeramik (d. h. dem Keramikelement vor dem Bonden) ansteigt, wenn kein Mittel zur Förderung der Spinellbildung zwischen Metallschicht und Keramikelement eingebracht wird. Im Gegensatz dazu ändert sich der Wert für $S_a$ um weniger als 10 % , bevorzugt weniger als 5 % und besonders bevorzugt weniger als 3 % gegenüber der Wert für $S_a$ für die Rohkeramik, wenn ein Mittel zur Förderung der Spinellbildung eingebracht wird.

Insbesondere lässt sich ein Kennwert definieren, an Hand dem man den Einfluss des Mittels zur Förderung der Spinellbildung erkennt. Dieser definiert sich durch

$$Kennwert\ K \ = \frac{S_a(abge\ddot{a}tzt) - S_a\,(Rohkeramik)}{S_a\,(Rohkeramik)}$$

In der unten dargestellten Graphik ist diese Kenngröße für die unterschiedlichen Mengen an Mitteln zur Förderung der Spinellbildung dargestellt. Es ist festzustellen, dass die Kenngröße mit zunehmender Menge an Mittel zur Förderung der Spinellbildung kleiner wird. Insbesondere weist die Kenngröße Werte auf, die kleiner als 10%, bevorzugt kleiner als 5 % und besonders bevorzugt kleiner als 2 % oder sogar kleiner als 1,5 % sind.

Zusammenfassend ist festzustellen, dass sich das gezielte Einbringen von zusätzlichen Mitteln zur Förderung der Spinellbildung, die nicht selbst vom Keramikelement 30 oder der Metallschicht 10, 20 ausgehen und einen Schwellenwert überschreiten, signifikant Einfluss nehmen können auf die Bindungsschicht 12, 14 zwischen Metallschicht 10, 20 und Keramikelement 30, die sich auch im gefertigten Metall-Keramik-Substrat 1 niederschlägt. Insbesondere ist erkennbar, dass auf diese Weise, eine gezielte Einstellung der Haftfestigkeit und der Temperaturwechselbeständigkeit sowie auf einen Widerstand vorgenommen werden kann, insbesondere in einem Umfang, der über das hinausgeht, was auftritt, wenn das Keramikelement 30 wie üblich an die Metallschicht 10, 20 gebunden ist.

Bezugszeichenliste:

1      Metall-Keramik-Substrat
10     erste Metallschicht
12     erste Bindungsschicht
14     zweite Bindungsschicht
20     zweite Metallschicht
30     Keramikschicht

**Patentansprüche**

**1.** Verfahren zur Herstellung eines Metall-Keramik-Substrats (1), umfassend

- Bereitstellen mindestens einer ersten Metallschicht (10) zur Ausbildung einer Bauteilmetallisierung und eines Keramikelements (30),
- Anbinden der mindestens einen ersten Metallschicht (10) an das Keramikelement (30) mittels eines Direktanbindungsverfahrens, insbesondere eines DCB-Verfahrens oder eines DAB-Verfahrens, durch das eine gemeinsame erste Bindungsschicht (12) zwischen Keramikelement (30) und der mindestens einen Metallschicht (10) ausgebildet wird,

wobei zur Verbesserung einer Haftfestigkeit zwischen der mindestens einen ersten Metallschicht (10) und dem Keramikelement (30) für das Anbinden mittels des Direktanbindungsverfahrens ein erstes Mittel zur Förderung einer Spinellbildung in einem für die Bildung der ersten Bindungsschicht (12) vorgesehenen Bereich bereitgestellt wird, wobei das Keramikelement (30) innerhalb des Keramikelements (30) ein erstes Mittel zur Förderung der Spinellbildung umfasst.

**2.** Verfahren gemäß Anspruch 1, ferner umfassend:

- Bereitstellen mindestens einer zweiten Metallschicht (20) zur Ausbildung einer Rückseitenmetallisierung, wobei die mindestens eine erste Metallschicht (10) und die mindestens eine zweite Metallschicht (20) an einander gegenüberliegenden Seiten am Keramikelement (30) angeordnet werden,
- Anbinden der mindestens einen zweiten Metallschicht (20) an das Keramikelement (30) mittels des Direktanbindungsverfahrens, durch das eine gemeinsame zweite Bindungsschicht (14) zwischen Keramikelement (30) und der mindestens einen zweiten Metallschicht (20) ausgebildet wird, wobei zur Verbesserung einer Haftfestigkeit zwischen der zweiten Metallschicht (20) und dem Keramikelement (30) für das Anbinden mittels des Direktanbindungsverfahrens ein zweites Mittel zur Förderung einer Spinellbildung in einen Bereich zur Bildung der zweiten Bindungsschicht (14) bereitgestellt wird, wobei die mindestens eine erste Metallschicht (10) und die mindestens eine zweite Metallschicht (20) in einem gemeinsamen Anbindungsvorgang, vorzugsweise in einem gemeinsamen Ofendurchlauf, an das Keramikelement (30) angebunden werden.

**3.** Verfahren gemäß einem der vorhergehenden Ansprüche, wobei das erste Mittel zur Förderung der Spinellbildung und/oder das zweite Mittel zur Förderung der Spinellbildung Magnesium, Eisen, Barium, Kalzium, Aluminium und/oder Mangan umfasst, insbesondere in oxidierter Form.

**4.** Verfahren gemäß einem der vorhergehenden Ansprüche, wobei das erste Mittel zur Förderung der Spinellbildung und/oder das zweite Mittel zur Förderung der Spinellbildung im Wesentlichen frei ist von einer Aluminiumverbindung und/oder einen Aluminiumoxidverbindung.

**5.** Verfahren gemäß einem der vorhergehenden Ansprüche, wobei eine Konzentration an ersten Mittel zur Förderung der Spinellbildung größer ist als 20 g/l, bevorzugt größer als 50 g/l und besonders bevorzugt größer als 150 g/l und/oder wobei eine Menge an zweiten Mittel zur Förderung der Spinellbildung größer ist als 20 g/l, bevorzugt größer als 50 g/l und besonders bevorzugt größer als 150 g/l.

**5.** Verfahren gemäß einem der vorhergehenden Ansprüche, wobei mit dem ersten Mittel zur Förderung der Spinellbildung eine Häufigkeit eines ersten Spinelltyps im gefertigten Metall-Keramik-Substrat eingestellt wird.

**6.** Verfahren gemäß Anspruch 5, wobei eine Dicke des abgeschiedenen ersten Mittels zur Förderung der Spinellbildung und/oder des abgeschiedenen zweiten Mittels zur Förderung der Spinellbildung einen Wert annimmt, der größer ist als 100 nm, bevorzugt größer als 500 nm und besonders bevorzugt größer als 1000 nm ist.

**7.** Verfahren gemäß einem der vorhergehenden Ansprüche, wobei

- die mindestens eine erste Metallschicht (10) derart behandelt wird, dass an gegenüberliegenden Seiten der ersten Metallschicht (10) unterschiedliche Mengen an erste Mittel zur Förderung der Spinellbildung bereitgestellt werden und/oder
- die mindestens eine zweite Metallschicht (20) derart behandelt wird, dass an gegenüberliegenden Seiten der zweiten Metallschicht (10) unterschiedliche Mengen für das zweite Mittel zur Förderung der Spinellbildung bereitgestellt werden.

**8.** Keramikelement (30) für ein Verfahren gemäß einem der vorhergehenden Ansprüche, wobei das Keramikelement (30) ein erstes Mittel zur Förderung der Spinellbildung umfasst, beispielsweise an einer Außenseite des Keramikelements (30) und/oder innerhalb des Keramikelements (30).

**9.** Metallschicht (10, 20) für ein Verfahren gemäß einem der Ansprüche 1 bis 6, wobei die Metallschicht (10, 20) ein Mittel zur Förderung der Spinellbildung an einer Außenseite der Metallschicht (10, 20) umfasst.

**10.** Metall-Keramik-Substrat (1) hergestellt mit einem Verfahren gemäß einem der Ansprüche 1 bis 8, wobei im gefertigten Metall-Keramik-Substrat (1) zwischen Keramikelement (30) und Metallschicht (10, 20) eine Spinelle umfassende Bindungsschicht, insbesondere die erste Bindungsschicht (12) und/oder die zweite Bindungsschicht (14), ausgebildet ist, wobei die Spinelle umfassende Bindungsschicht mindestens einen ersten Spinelltyp aufweist, der zumindest einen Bestandteil des ersten und/oder zweitne Mittel zur Förderung einer Spinellbildung umfasst, wobei der Anteil der Spinelle des ersten Spinelltyps mindestens 1,3- mal, bevorzugt mindestens 3-mal und besonders bevorzugt mindestens 5-mal so groß ist wie der Anteil der Spinelle des ersten Spinelltyps in einem Referenzsubstrat, in dem eine Bindung zwischen der Metallschicht (10, 20) und dem Keramikelement (30) mittels eines Direktanbindungsverfahren ohne eingebrachtes erstes und/oder zweites Mittel zur Förderung einer Spinellbildung erfolgt ist.

**11.** Metall-Keramik-Substrat (1) gemäß Anspruch 10, wobei die Spinnelle umfassende Bindungsschicht (12, 14) einen zweiten Spinelltyp umfasst, wobei der Anteil an Spinellen des zweiten Spinelltyps mindestens 1,3-mal, bevorzugt mindestens 5-mal und besonders bevorzugt 15-mal so klein ist wie der Anteil an Spinnellen des zweiten Spinelltyps in dem Referenzsubstrat.

**12.** Metall-Keramik-Substrat (1) gemäß Anspruch 11 oder 12, wobei ein Widerstand über einen Isolationsgraben im gefertigten Substrat mindestens 1,5 - mal, bevorzugt mindestens 2,5 - mal und besonders bevorzugt mindestens 3,5 - mal so groß ist wie der Widerstand über einen Vergleichsisolationsgraben am Referenzsubstrat.

**13.** Metall-Keramik-Substrat (1) gemäß einem der Ansprüche 10 bis 12, wobei eine Rauheit der Spinellschicht im gefertigten Metall-Keramik-Substrat (1) kleiner ist als eine Rauheit im Referenzsubstrat und/oder im gefertigten Metall-Keramik-Substrat eine Flächenrauheit einen Wert annimmt der größer ist als

**14.** Metall-Keramik-Substrat (1) hergestellt mit einem Verfahren gemäß einem der Ansprüche 1 bis8, umfassend

- ein Keramikelement (30), eine Bauteilmetallisierung (10) und eine Rückseitenmetallisierung (20), wobei entlang einer Stapelrichtung (S) gesehen das Keramikelement (30) zwischen der Bauteilmetallisierung (10) und der Rückseitenmetallisierung (20) angeordnet ist,
- eine erste Bindungsschicht (12) zwischen dem Keramikelement (30) und der Bauteilmetallisierung (10) mit einem ersten Spinellanteil/Volumen und
- eine zweite Bindungsschicht (14) zwischen dem Keramikelement (30) und der Rückseitenmetallschicht (30) mit einem zweiten Spinellanteil/Volumen,

wobei sich eine Haftfestigkeit für die Bauteilmetallisierung (10) und/oder die Rückseitenmetallisierung (20) ausbildet, die im Mittel einen Wert annimmt, der größere ist als 6 N/mm, bevorzugt größer als 8 N/mm und besonders bevorzugt größer als 10 N/mm und/oder ein Unterschied zwischen einer Haftfestigkeit für die Bauteilmetallisierung (10) und einer Haftfestigkeit für die Rückseitenmetallisierung (20) kleiner als 15 %, bevorzugt kleiner als 10 % und besonders bevorzugt kleiner als 5 % der Haftfestigkeit der Bauteilmetallisierung (10) ist.

**15.** Metall-Keramik-Substrat (1) gemäß Anspruch 14, wobei eine Dicke einer Spinellschicht größer ist als 200 nm bevorzugt größer als 500 nm und besonders bevorzugt größer als 1000 nm.

1

10

12

30

14

20

FIG. 1

FIG. 2

HPS9: Mg-Menge (Spinell)
über Mg-Dotierung

FIG. 3

**Chemische Elemente über Mg**

Mg über MgSO4 in g/l

● Mn 178-186    ◉ Cu 245-252    ◎ Ca 111-118

# FIG. 4

FIG. 5

Fig. 6

Ausbildung der Rauheit Sa in Abhängigkeit von Mg

Rauheit Sa in µm

+12%
0,652

+10%
0,643

+3%
0,597

+1%
0,588

0,580

0,534
-8%

Variante ROH
Dotierung

Mg über MgSO4 in g/l

Kennwert K

Kein Mg

12%

11%

wenig Mg

viel Mg

5%

1%

0%
ROH

Sehr viel Mg

-8%

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013104739 A1
- DE 19927046 B4
- DE 102009033029 A1